# EUROPEAN PATENT SPECIFICATION

(11) **EP 3 901 627 B1**
(45) Date of publication and mention of the grant of the patent: **30.10.2024**
(21) Application number: 21170351.7
(22) Date of filing: 26.04.2021
(51) Int. Cl.: G01N 30/20

(54) **MODIFIED ROTOR GROOVE FOR AVOIDING TRANSIENT PRESSURE PEAKS IN A MULTIPOSITION VALVE**
MODIFIZIERTE ROTORRILLE ZUR VERMEIDUNG VON TRANSIENTEN DRUCKSPITZEN IN EINEM MEHRPOSITIONSVENTIL
RAINURE DE ROTOR MODIFIÉE POUR ÉVITER LES PICS DE PRESSION TRANSITOIRE DANS UNE SOUPAPE MULTI-POSITION

(30) Priority: 24.04.2020 EP 20171228
(43) Date of publication of application: 27.10.2021
(73) Proprietor: KNAUER Wissenschaftliche Geräte GmbH, 14163 Berlin (DE)
(72) Inventor: Melnykov, Michael, 16321 Bernau (DE); Zenichowski, Karl, 14473 Potsdam (DE)
(74) Representative: Hertin und Partner Rechts- und Patentanwälte PartG mbB

(56) References cited:
- US-A1- 2010 032 603
- US-A1- 2016 310 870
- US-A1- 2017 343 520
- US-B2- 10 302 603

## Description

The invention relates to a rotary shear valve assembly for a liquid chromatography system comprising a stator comprising a central port and a plurality of outer ports for fluidly connecting the valve assembly to components of a liquid chromatography system as well as a rotor having a rotor face abutting said stator at a stator-rotor interface and exhibiting at least one radially extending rotor groove for a selective switching of a fluid connection of the central port with one of the outer ports to a fluid connection with another one of the outer ports. The rotary shear valve assembly is characterized in that the rotor groove comprises a ring-shaped or circular shaped end portion being dimensioned such that during a rotation of the rotor for a selective switching a fluid connection of the central port with at least one of the outer ports is maintained, so as to avoid transient peaks of pressure or flow rate in intermediate positions during a switching. The invention further relates to a liquid chromatography system comprising such a rotary shear valve assembly as well as uses of the rotary shear valve assembly or the liquid chromatography system.

### BACKGROUND OF THE INVENTION

High performance liquid chromatography (HPLC), fast protein liquid chromatography (FPLC) and simulated moving bed (SMB) chromatography are techniques in analytical and preparative chemistry for separation, identifications and quantification of solute/ analyte mixtures dissolved in a liquid/ eluent stream.

A typical liquid chromatography system includes the following parts: an eluent reservoir, a valve for a solvent selection, a pump for eluent delivery, an injection valve or a connected sample loop for a sample injection, a single or an arrangement of multiple columns for an analyte separation and/or purification, one or more detectors for characterizing the elute and/or detecting an analyte and a fraction collector for purification tasks.

For guiding the liquids throughout the liquid chromatography system different valve systems are known in the prior art. Often rotary shear valves are employed.

Typically, a rotary shear valve assembly comprises a stator device with one or more ports and a rotor device exhibiting grooves. When compressed together the components form at a rotor-stator interface a fluid-tight seal. Both devices may be rotated relative to one another for switching a connection between the ports.

Different configurations for rotor grooves and stator ports are known in the prior to allow for multiple switching options.

US 10113995 B2 discloses a rotary shear diverter type in which typically the stator exhibits the shape of a disk and includes a plurality of circumferentially arranged outer ports. A disk-shaped rotor comprises arc-shaped rotor grooves resembling a kidney and having an arc length that covers the distance of at least two adjacent outer ports. By rotating the rotor in respect to the stator a fluid connection between two adjacent outer ports may be established.

Such a rotary shear diverter is typically utilized for sample injection purposes by guiding the liquid flow path of a chromatographic system through or aside a sample containing reservoir. It usually allows only for two different switching-positions and connectivity-configurations of neighbouring outer ports.

As an alternative rotary shear valve assembly US 10113995 B2 discloses furthermore a selector type with a stator having a central port and a plurality of outer ports. The corresponding rotor face exhibits a radially extending rotor groove being dimensioned such that a rotation of the rotor allows for selectively connecting the central port with any one of the outer ports. Thereby, a larger number of fluid connections may be established. Moreover, US 10113995 B2 continues to suggest combinations of both types of rotor grooves allowing for even more types of fluid connections, in particular by connecting the central port with two or more of the outer ports.

A disadvantage of known rotary shear valves relates to the built-up of transient pressure or flow rate peaks while switching connections. Such transient pressure peaks may occur, if for a brief moment during the relative rotation between a rotor and stator, a pressured inlet port (e.g. a central port) is not fluidly connected to any outlet port (e.g. an outer port) or vice versa. Typically, the pressure peak is followed by a flow rate peak as soon as the new connection is established.

Especially in the context of liquid chromatography system, such as high-performance liquid chromatography (HPLC) or fast protein liquid chromatography (FPLC), substantial pressure transients may arise and compromise the performance of such systems as well as the lifetime of its components. In particular, if transmitted to the separation columns disruptive effects may occur, which in some cases may lead to a loss of the separation efficiency. The disruptive effects include damaging and accelerated aging of column bed materials induced by such sharp pressure transients (e.g. discontinuities of material properties, material density or even collapse of material cavities). A loss of separation efficiency is of particular severe for highly pressure-sensitive polymer-based column materials (e.g. Agarose, Sephadex^{™}, Sephacryl^{™}) used for example in size exclusion chromatography and different kinds of biochromatographic applications.

Further disadvantages of pressure transients may relate to the stopping of a pump, if max pressure limits are exceeded and chromatographic run is interrupted, or severe leakages caused by a break of pressure sensitive tubing material or a coming apart of tubing from fluid connectors. For instance, in FPLC the often employed polymer material is especially error-prone. Furthermore, lifetime of shear valve assemblies may be affected by damaging sealing surfaces via salt residues of dried-up buffer components, forced into the interface between stator and rotor component by pressure transients exceeding the pressure rating of the valve.

In case of SMB chromatography transient peaks are particularly pronounced, since in such multi-column circulation systems several valves have to switch synchronously. In systems of the state of the art such a synchronous switch is hardly exact, such that transient pressure peaks occur, which may stress the columns, lead to sample loss at additionally required pressure relief valves or to a limitation of the flow rates or purification performance of the system.

US 8047060 B2 addresses the issue of transient pressure peaks in a rotary shear valve for an injection, which comprises arc-shaped rotor channels allowing for a selective connection of two adjacent outer (stator) ports. US 8047060 B2 suggests to provide a groove between the adjacent outer ports, and to choose a length for said groove and arc-shaped rotors channels such that when switching a connection a continuous flow path is maintained between a first and second stator port until a new fluid connection between the second and a third stator port is established. Thereby, even in intermediate positions of the switching a fluid connection between stator ports is reliable maintained. However, the solution leads to large dwell volumes. Moreover, in the lengthened channels dead ends for the fluid flow occur, which may lead to carryovers further compromising on the analytic performance. Further disadvantages relate to difficulties in cleaning the valve assembly. In this regard, it is noted that buffer containing eluents, typically used for FPLC may leave salt crusts, blocking the valve or damaging seal surfaces. Moreover, if not thoroughly cleaned biofouling or carry over of earlier runs may not be acceptable for purification applications.

Similarly, US 4506558 B2 suggests to closely space pump and column openings in contrast to sample openings in an injector for injecting a sample at high pressure into a chromatographic column, while a large circumferentially extending rotor channel is provided. When switching from a load position to an inject position, during most of the rotation angle the rotor port and column openings continue to be connected. Only when an inject position is approached, the trailing edge of the channel disconnects from the pump opening, while the leading edge connects to a sample opening. When the rotor is rapidly turned, according to the authors, only a very brief interruption of liquid flow into the column shall occur. However, also in this case lengthened channels may yield dead ends for the fluid flow and moreover increase the dwell volume. Further disadvantages result from an increase of the channel surface and therefore the force acting by a pressurized liquid within the channel. An increased spring-force between rotor seal and valve-stator may be needed to restore pressure-ratings of the valve assembly which in turn is likely to have a negative impact on the lifetime of the valve via increased abrasion between both surfaces.

US 6012488 B2 relates to a multi-positioning valve for an HPLC system of the above-described selector type including a stator with a central hole and a circle of sample and solvent holes. The valve includes a rotor with a radially extending groove that allows to connect one of the sample or solvent holes to the central hole. US 6012488 B2 suggests to dimension said radially extending groove wide enough in relation to the space between adjacent supply holes, such that as the groove moves from one hole of the circle to the next hole, the groove becomes partially open to the next adjacent hole before it leaves the previous one. The solution effectively reduces pressure transient peaks for such type of rotatory shear valves and avoids problems related to dead ends, as described above, but also leads to enlarged dwell volumes. In general, the dwell volume of the rotor groove is minimized by defining its width in relation to the stator port inner diameter. US 6012488 B2 proposes instead to set the width of the groove to at least the distance of adjacent stator ports. Such a widened groove is disadvantageous in terms of dwell volume and carry-over effects due to weakly run through areas, especially for small port diameters and lower flow rates. Furthermore, in practice the minimal diameter of the circumferentially arranged outer ports is limited by the size of the utilized fluidic fittings.

US 2017/0343520 A1 relates to a sample management device for liquid chromatography. The sample management device comprises a source flow path, for example a reactor, and a volume flow adjustment unit, which is arranged to define a volume to be diverted from the source flow path, for example to a separation unit comprising a chromatography column. A fluidic valve provides a switchable connection between the source flow path and the volume flow adjustment unit. In Fig. 13, an embodiment comprising three rotor grooves 166 is disclosed. One rotor groove 166 has a radially outwardly directed portion for a switchable connection between a central port and outer ports. This is followed by a kidney-shaped or arc-shaped section which allows simultaneous connection of two stator ports to the central port. Albeit neither disclosed nor suggested, it is conceivable that intermediate pressure peaks during switching may be avoided the present solution leads to unfavorable increased dwell volume and dead ends.

In light of the difficulties in the prior art there is a need for improved or alternative means for providing a rotatory shear valve.

### SUMMARY OF THE INVENTION

The technical problem underlying the present invention is the provision of improved or alternative means for providing a rotatory shear valve assembly for a liquid chromatography system. In particular, an objective is to provide a rotary shear valve assembly that effectively circumvents pressure transient peaks during a switching of connections, while ensuring minimal dwell volumes and avoiding occurrence of dead ends in the flow path at the same time.

The solution to the technical problem of the invention is provided in the independent claims. Preferred embodiments of the invention are provided in the dependent claims.

The invention relates a rotary shear valve assembly for a liquid chromatography system comprising
a) a stator having a stator face and comprising a central port and a plurality of outer ports for fluidly connecting the valve assembly to components of the liquid chromatography system, the plurality of outer ports being arranged on a circular circumference the center of which being defined by the central port and
b) a rotor having a rotor face abutting said stator at said stator face and exhibiting at least one rotor groove defined in said rotor face, the at least one rotor groove radially extending from a central axis of the rotor;

wherein the rotor is rotatable, relative to the stator, about said central axis, which coincides with the position of the central port, such that rotating the rotor allows for a selective switching of a fluid connection of the central port with one of the outer ports to a fluid connection of the central port with another one of the outer ports and
wherein the at least one rotor groove defined in said rotor face comprises a radially extending portion and a ring-shaped end portion or a circular shaped end portion being dimensioned such that during the rotation of the rotor for the selective switching a fluid connection of the central port with at least one of the outer ports is (preferably constantly) maintained , so as to avoid the occurrence of transients of pressure or flow rate in intermediate positions during the switching.

The ring-shaped end portion or circular shaped end portion is dimensioned such that during the rotation of the rotor at any position a fluid connection of the central port with at least one of the outer ports is maintained. This may be preferred for multi-position rotary shear valve assembly which shall allow for a fluid connection of a central port with any one of the outer ports, preferably for instance three, four, five, six or more outer ports.

Advantageously the rotor groove according to the invention ensures that in every position a connection between the central port and at least one of the outer ports, preferably at most two of the outer ports, is maintained. Therefore, while switching a connection between the central port and a first outer port to a connection of the central port with a second outer port the occurrence of transient peaks of pressure or flow rate is effectively avoided. In particular, even in intermediate positions, i.e. positions in which the rotor groove is not centrally directed towards a specific outer port, a fluid connection is maintained to one of or both of the nearest neighboring outer ports.

The rotor groove according to the invention may equally convey its beneficial effect to two-position injection valves, which may for instance allow for a selective switching of a fluid connection of the central port with a first outer port in a load position to a fluid connection of the central port with a second outer port in an inject position. Advantageously, the ring-shaped or a circular shaped end portion is in such cases dimensioned such that during the rotation of the rotor for the selective switching a fluid connection of the central port from the first to the second outer port (or from a load to an inject position) is (preferably constantly) maintained. Maintained preferably relates to being maintained for the entire path of rotation necessary for the selective switching. The occurrence of transient peaks of pressure or flow rate while switching from a load to an inject position is effectively avoided.

A fluid-tight seal at the rotor-stator interface may be achieved by abutting said rotor face against said stator face and preferably compressing the said components together by appropriate fixation means. Preferably the stator face and rotor face are substantially planar faces to this end. Substantially planar preferably means that the faces of the rotor and stator are sufficiently planar to allow for a fluid-tight seal at the rotor-stator face, except at locations of a groove (preferably in the rotor face, optionally in the stator face) to allow for establishing desired fluid connections for the stator ports as described herein.

To this end the rotary shear valve assembly may comprises a valve housing, wherein the rotor is rotatably mounted in said valve housing and the stator is fixedly attached thereto. Preferably a spring packet may be located within the valve housing, which presses the rotor with its rotor face against the stator face of the stator and wherein preferably the elastic restoring force of the spring packet may be chosen according to a maximal fluid pressure for which the valve assembly shall ensure a fluid-tight connection at the rotor-stator interface. The rotor face may therefore be also referred to as a seal, which only allows for a fluid flow path connecting (stator) ports along grooves defined in said rotor face.

By selectively rotating the rotor groove from a position aligned with a first of the outer ports to a position aligned with a second of the outer ports, different fluid connections of the central port with the outer ports may established.

In contrast to attempts in the prior art the rotary shear valve assembly according to the invention allows to effectively circumvent pressure transient peaks during such a switching of connections at minimal dwell volumes and without any dead ends occurring in the flow path. By minimizing the groove width in relation to a given port bore inner diameter (ID) and desired application / flow rate range.

To this end a rotor groove is suggested that comprises a radially extending (preferably linear) portion, which exhibits a ring-shaped end or circular shaped portion. As used herein ring-shaped end portion preferably relates to any line-shaped portion of a groove forming a closed circuit. Preferred shapes include circular, elliptical, triangular, trapezoidal or rectangular shapes. These ensure particularly well an undistributed flow path without any dead ends, thereby effectively avoiding mixing and maintaining a separation of analytes.

Preferably the length of radially extending (preferably linear) portion of the rotor groove corresponds to the radius of a circumference on which the plurality of outer ports are positioned. The length of radially extending (preferably linear) portion of the rotor groove relates preferably to the radial distance of the center of the rotor axis to the first (along the radial direction) edge of the ring-shaped or circular shaped end portion. It is preferred that the length of radially extending (preferably linear) portion of the rotor groove is determined such that the radial distance of the center of the most distal (outer, most radial) part of the ring-shaped end portion is substantially equal to the radial distance of the center of the plurality of outer ports, preferably arranged on a circular circumference. In another embodiment utilizing a circular shaped end portion of the radially extending (preferably linear) rotor groove it is preferred that the length of the portion of said radially extending rotor groove is determined such that the radial distance of the center of a circular shaped end portion is substantially equal to the radial distance of the center of the plurality of outer ports, preferably arranged on a circular circumference.

Terms such as substantially, approximately, about, etc. preferably describe a tolerance range of less than ± 20%, preferably less than ± 10%, even more preferably less than ± 5% and in particular less than ± 1%. Indications of substantially, approximately, about, etc. always also disclose and include the exact value or property mentioned.

Preferably, but not limited to, the radially extending (preferably linear) portion of the rotor groove joins the ring- or circular shaped end portion of that groove in a centrical manner, exhibiting a mirror symmetry for the union of both portions of that groove along a radial symmetry axis, whereas said symmetry axis is defined by the center of the central port and the center of said ring- or circular shaped end portion of the rotor groove. By symmetrical design of said ring- or circular shaped end portion of the groove advantageously a symmetrical flow regime is achieved, without biasing the eluent flow in an intermediate position of the rotor groove between two equally distant outer stator ports.

Preferably the angular width of the ring-shaped or circular shaped end portion of said groove is equal or larger than the angular distance between any two neighboring outer ports in particular, in case of a multi-position rotary shear valve that may allow for a selective switching of the central port with any one of the outer ports. Thereby, a continuous flow path is maintained even in intermediate positions during a rotation as described.

In case of a two-position multiport (preferably injection) valve, which is in particular adapted to allow for a selective switching of a fluid connection of the central port with a first outer port (e.g. in a load position) to a second outer port (e.g. in an inject position), the angular width of the ring-shaped end portion of said groove is preferably equal or larger than the angular distance between said first and second outer ports. Thereby, a continuous flow path is maintained even in intermediate positions during a rotation to switch between a first position (e.g. a load position) and a second position (e.g. an inject position) as described.

The line width of the ring-shaped end portion as well as the radially extending portion of the groove may be freely adapted to requirements of a liquid chromatography system, into which the valve assembly is to be included. Preferably the line width of the ring-shaped end portion is governed by a difference between outer and inner diameter of the ring-shaped end portion. In particular, the line width both of the ring-shaped end portion, as well as the radially extending linear portion, may be reduced to decreases the dwell volume.

In an embodiment, the width of the ring-shaped part of the rotor groove is smaller compared to the line width of the radially extending linear part of that groove. Hereby, the dwell volume is advantageously further minimized, since the eluent flow is split while passing between the radially extending portion and the ring-shaped end portion of the rotor groove.

In an embodiment the groove comprises a radially extending (preferably linear) portion, which exhibits a circular shaped end portion. As used herein circular shaped portion preferably relates to an end portion of the groove exhibiting an area depression of circular shape. The depression may exhibit a constant depth, e.g. formable by a drilling of circular shape. The depression may however also exhibit a conical, triangular, rectangular, or trapezoidal shape, wherein preferably the depth of the depressed end portion is higher at the center compared to the rim/edges.

Preferably the diameter of the circular shaped portion exceeds the circumferential distance between neighboring outer ports (arc length edge to edge) such that at any position during the rotation of the rotor a fluid connection of the central port with at least one of the outer ports is maintained.

The embodiment is particular preferred for liquid chromatography applications necessitating larger channel diameter of the groove in order to enable higher flow through rates. In particular when the line width of the radially extending portion of the groove is at least half of the distance between neighboring (or adjacent) outer ports a ring-shaped end portion characterized by a line-shaped portion of a groove forming a closed circuit is difficult to implement.

As discussed below in more detail the line width of the ring-shaped end portion is preferably lower but matched to the line width of the radially extending portion of the groove. In particular it is preferred that the cross-sectional area of the ring-shaped end portion of the at least one rotor groove is approximately half the cross-sectional area of the radially extending (preferably linear) portion of the at least one rotor groove to ensure a constant flow cross-section throughout the at least one rotor groove when aligned with a selected outer port.

When the line width of the radially extending portion of the groove is more than half of the distance between two adjacent outer ports, it is difficult to implement a ring-shaped end portion that matches the beneficial conditions for a constant flow cross-section.

The inventors have realized that in such a case it may be preferred to employ instead a circular shaped end portion, which extends beyond the (relatively large) radially extending portion of the groove (only) by that much as to ensure a fluid connection between the central port and at least one of the outer ports during a rotation for a selective switching, so as to avoid transient peaks of pressure or flow rate in intermediate positions of the switching.

Preferably to this end the diameter of the circular shaped-end portion is at least as large as the distance between two neighboring outer ports (edge to edge distance of the outer ports measured by the arc length along the circumference on which the plurality of outer ports are positioned). More preferably the diameter of the circular shaped-end portion is however less than double of the line width of the radially extending portion. If a circular shaped-end portion with a diameter larger than double of the line width of the radially extending portion of the groove would be necessary in order to ensure a connection between two neighboring outer ports, it is preferred to implement instead a ring-shaped end portion. The inventors have realized that by means of a ring-shaped or a circular shaped end portion as described above particular small dwell volumes can be realized, while continuing to efficiently avoid transient peak pressures or flow rates between intermediate positions of the switching.

The ring-shaped or a circular shaped end portion represent thus two alternative solutions for the same inventive concept; that is providing an end portion of a radially extending groove in such a manner as to ensure that during the rotation of the rotor a fluid connection of the central port with at least one of the outer ports is maintained, while minimizing dwell volume and avoiding occurrence of dead ends in the flow path at the same time.

A reduction of the dwell volume in any component of a liquid chromatography is of particular importance, since unfavorable dwell volumes may increase peak broadening and/or decrease peak resolution and detector signal intensity due to a dilution or remixing of formerly separated analytes.

While the rotary shear valve assembly may be advantageously employed for different fluidic systems, it is particularly suited for applications in liquid chromatography systems.

As used herein "liquid chromatography" relates to chromatographic techniques known in the art that are used to separate components of a mixture based on a particular characteristic of the components. Liquid chromatography is used to identify and quantify the different components. In general, liquid chromatography involves a liquid sample being passed over a solid adsorbent material packed into a column using a flow of liquid solvent. Each component (e.g., analyte such as a protein, DNA etc.) in the sample interacts slightly differently with the adsorbent material, thus retarding the flow of the analytes. If the interaction is weak, the analytes flow off the column in a short amount of time, and if the interaction is strong, then the analytes take a longer time to flow off the column.

The active component of the column, referred to as the sorbent, is typically a granular material made of solid particles (e.g., silica, polymers, etc.), and can range from approximately 2-50 micrometers in size. The components of the sample mixture are separated from each other due to their different degrees of interaction with the sorbent particles. The pressurized liquid is typically a mixture of different polar (e.g. water, acetonitrile or methanol) or apolar (e.g. cyclohexane, dioxane, dichloromethane) solvents and is referred to as a "mobile phase" or "eluent". The composition and temperature of the mobile phase liquid plays a major role in the separation process by influencing the interactions between sample components and the sorbent. These interactions are physical in nature, such as hydrophobic (dispersive), dipole-dipole and ionic, or some combination thereof.

The sample mixture to be separated and analyzed is introduced, in a discrete small volume (typically microliters), into the stream of mobile phase percolating through the column. The components of the sample move through the column at different velocities, which are function of specific physical interactions with the sorbent (also called stationary phase). The velocity of each component depends on its chemical nature, on the nature of the stationary phase (column) and on the composition of the mobile phase. The time at which a specific analyte emerges from the column is referred to as its "retention time". The retention time measured under particular conditions is considered an identifying characteristic of a given analyte.

A liquid chromatography system generally includes a sampler (or sample injector), pumps one or more columns, and a detector. The sampler brings the sample mixture into the mobile phase stream which carries it into the column. The pumps deliver the desired flow and composition of the mobile phase liquid through the column. The detector typically generates a signal proportional to the amount of sample component emerging out of the column, thus allowing for quantitative analysis of the sample components. Furthermore, valves such as the one described can be incorporated at different positions in the flow path scheme and for different purposes within a chromatography system (e.g. buffer or eluent selection before the pump, sample injection after the pump and before the column, column selection before and after a set of columns and after the column for detector selection and/ or fractioning of the eluent flow). Various variations of liquid chromatography and suited systems are known in the prior art including for instance high performance liquid chromatography (HPLC), a simulated moving bed (SMB) chromatographic process or fast protein liquid chromatography (FPLC).

As used herein the term "stator" preferably refers to a non-rotatable component of the rotary shear valve assembly comprising a central port and a plurality of outer ports for fluidly connecting the valve assembly to different components of the liquid chromatography system. The stator is preferably fixedly attached to a valve housing in which a rotor is rotatably mounted.

The central port defines a central passage through the stator and the plurality of outer ports each define outer passages through said stator.

A plurality of outer ports may designate at least two, three or more outer (stator) ports.

In an embodiment the rotary shear valve assembly comprise four, six, eight or more outer ports arranged on a circular circumference on said stator.

The stator may comprise 4 to 32, preferably 6 to 16 stator ports.

In an embodiment the plurality of outer ports is arranged on a single circular circumference, preferably spaced equidistantly.

The diameter of the circular circumference on which the plurality of outer ports is arranged is in between 2 to 30 mm, preferably between 4 to 12 mm. Any value (or sub-range) within this range may be considered as a preferred diameter. For example, 2 mm, 3 mm, 4 mm, 5 mm, 6 mm, 7 mm, 8 mm, 9 mm, 10 mm, 12 mm, 15 mm, 20 mm, 25 mm or 30 mm, without limitation.

In an embodiment the plurality of outer ports is arranged on two or more circumference with differing diameters.

The inner diameter of the stator ports (center port or outer ports) may be chosen depending on the application and desired flow rates.

The ports (center port and/or plurality of outer ports) may exhibit a diameter from 0.1 mm to 5 mm. Any value (or sub-range) within this range may be considered as a preferred diameter. For example, 0.1 mm, 0.2 mm, 0.3 mm, 0.4 mm, 0.5 mm, 0.6 mmm, 0.7 mm, 0.8 mm, 0.9 mm, 1.0 mm, 1.25 mm, 1.5 mm, 1.75 mm, 2 mm, 2.5 mm, 3 mm, 3.5 mm, 4 mm, 4.5 mm or 5 mm without limitation.

In an embodiment the stator may comprise one or more stator grooves, preferably elongated stator grooves. For instance, a stator groove allow for extending the angular or rotational path length along which the rotor can be rotated without interrupting a fluidic connection between a first fluidic channel of the stator, build by an outer stator port, and extended by said stator groove, and a second fluidic channel of said rotor, build by a rotor groove. The described extension of angular or rotational path length of the rotor rotation along which a fluidic connection between said pair of fluidic channels of stator and rotor are preserved is preferably established by reducing the effectively sealing or fluidically tight angular width between adjacent positions of the circularly arranged, outer stator ports. To this end the additional stator grooves are positioned at the rotor-abutting surface of the stator and may therefore overlap along the angular width of the stator groove, with afore mentioned rotor grooves, for single or multiple positions of the rotor, along its rotation around the commonly shared rotational axis of both, rotor, and stator, to form a continuous channel, suitable for the passage of a liquid along stator passage, stator groove and rotor groove. Preferably, said stator grooves have their main extension along the same circumferential on which the plurality outer ports is arranged, starting at the angular position (angular coordinate, azimuth) of one or multiple positions of said outer ports and being elongated towards an adjacent outer port. Preferably said stator grooves covers at least 25% or more and at most 75% or less of the angular distance between two adjacent outer ports. Said stator grooves may exhibit the shape of a kidney, which preferably means that the grooves are arc-shaped grooves direction and preferably exhibiting a larger circumferential width (arc length) than extension along the radial direction. Preferably said stator grove exhibit a radial width equally or less than the diameter of the stator port.

The stator is preferably made of an inert, chemically stable and liquid tight material.

The stator can be made of chemically stable synthetic materials, particularly preferably polyaryletherketone (PEAK), preferably polyetheretherketone (PEEK), polyvinylidene difluoride (PVDF) or polyphenylensulfid (PPS).

The stator can be made of metal or metal alloy, preferably stainless steel, nickel-based stainless steel such as Nitronic^{®} available by AK Steel International, titanium or nickel-based alloys such as Hastelloy^{®} available by Haynes International Inc.

The stator can be made of a coated metal or metal alloy, preferably steel and stainless steel to improve surface parameters like hardness, chemical inertness and tribological characteristics. The coating can be produced by gas-phase deposition processes taking place in a vacuum, like chemical vapor deposition and physical vapor deposition processes. The coating can be made of Titanium carbide, Titanium nitride, Titanium carbonitride, Titanium aluminium nitride, Chromium nitride and Diamond-like carbon.

As used herein the term "rotor" preferably refers to a rotatable component of the rotary shear valve assembly comprising a rotor face abutting the stator and exhibiting at least one rotor groove defined in the rotor face. While the stator is preferably fixedly attached to a valve housing, the rotor is preferably rotatably mounted within said housing. Preferably the stator face and rotor face are substantially planar faces to this end. Substantially planar preferably means that the faces of the rotor and stator are sufficiently planar to allow for a fluid-tight seal at the rotor-stator face. Only at specific locations, where a rotor groove is positioned, selectable fluid connections between the stator ports are established. The rotor face may also be referred to as a rotor seal (or rotor sealing) which only allows for a fluid flow path connecting (stator) ports along grooves defined in said rotor face. The rotor as a rotatable component may be monolithic or be comprised of two or more parts fixedly attached. For instance, the rotor may comprise a rotor body and rotor face (i.e. rotor seal, rotor sealing), which may be fixedly attached to the rotor body.

This allows for replacing the rotor face with a first pattern of rotor grooves with a rotor face with a second pattern of rotor grooves depending on the requirements for a desired application. Likewise, a stator (including a desired pattern of stator ports) may be selectively mounted to a valve housing depending on the requirements of a desired application. The term groove preferably refers to a depression in a planar (rotor) face, which may be line shaped (such as a radially extending (preferably) linear portion or a ring-shaped end portion) or take the shape of an area (rather than resembling a line, such as a circular shaped end portion). The groove may be subdivided into one or more portions, which are may take a different shape, but are fluidly connected. The depth of depression (groove) may be for instance less than 1 mm or less than 0.5 mm, but may be chosen according to the desired dwell volume. The depth preferably relates to the maximal value of the depression, typically in the center of a line-shaped groove (or portion thereof) or a circular-shaped portion. The depth may be constant throughout the groove (and potentially portions thereof) or may vary.

According to the invention the rotor comprises at least one radially extending rotor groove comprising a radially extending portion and a ring-shaped or circular shaped end portion. Said at least one rotor groove allows for a selective switching by rotating the rotor between a first position in which a fluid connection of the central port is established with a first outer port and a second position in which a fluid connection of the central port is established with a second outer port. The ring-shaped and circular shaped end portion are dimensioned such that a fluid connection of the central port with the first and/or second port is maintained while rotating the rotor between said two positions, so as to reduce or avoid transient peaks of pressure or flow rate, when rotating the rotor between the first and second position.

The rotor may also comprise further rotor grooves for instance for establishing a fluid connection between two or more of neighboring outer ports. To this end the additional rotor grooves may exhibit the shape of a kidney, which preferably means that the grooves are arc-shaped grooves having a main extension along a circular circumferential direction and preferably exhibiting a larger circumferential width (arc length) than extension along the radial direction.

The rotor face may also be referred to as a seal, which only allows for a fluid flow path connecting (stator) ports along grooves defined in said rotor face.

The material of the rotor face is preferably chosen to allow for a particular fluid-tight connection at the rotor-stator interface at position where no grooves are present.

The rotor may be made of an inert, chemically stable and liquid tight material.

The rotor may be made of a chemically stable synthetic material, preferably polyetheretherketone (PEEK), polyphenylensulfid (PPS), polytetrafluoroethene (PTFE), ethylene tetrafluoroethylene (ETFE), polyimid or polyoxymethylene (POM).

In an embodiment the radially extending portion of the at least one rotor groove is a straight line. Preferably the length of said straight line is adapted to the radius of the circular circumference on which a plurality of outer ports is arranged. For a ring-shaped end portion it is preferred that the length of the radially extending linear portion of the rotor groove is selected such that the radial distance of the center of the most distal (outer, most radial) part of the ring-shaped end portion is substantially equal to the radial distance of the center of the plurality of outer ports arranged on a circular circumference. Utilizing a circular shaped end portion it is preferred that the length of the linear radially extending portion is selected such that the radial distance of the center of a circular shaped end portion is substantially equal to the radial distance of the center of the plurality of outer ports arranged on a circular circumference.

The cross-sectional area of the ring-shaped end portion of the at least one rotor groove may be approximately half the cross-sectional area of the radially extending portion of the at least one rotor groove to ensure a constant flow cross-section throughout the at least one rotor groove, when aligned with a selected outer port. Since the eluent flow is split while passing between the radially extending portion and ring-shaped end portion of the rotor groove said dimensioning ensures particular beneficial conditions in which the flow cross-section throughout the rotor groove does not change. Building up of a backpressure due to narrowing of a flow cross-section can be for instance efficiently avoided.

The dimensioning of the at least one rotor groove can be adapted to the desired application and flow rates.

In an embodiment the line width of the at least one radially extending rotor groove from 0.1 mm to 5 mm, preferably 0.2 mm to 2 mm. Any value (or sub-range) within this range may be considered as a preferred diameter. For example, 0.1, 0.2, 0.3 mm, 0.4 mm, 0.5 mm, 0.6 mmm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, 2 mm, 2.5 mm, 3 mm, 4 mm or 5 mm without limitation. The line width preferably refers to the (largest) extension of the cross-section of a line-shaped groove in the plane of the rotor face.

In an embodiment the radially extending portion of the at least one radially extending rotor groove exhibits a line width of less than 2 mm, preferably less than 0,75 mm. Any value (or sub-range) within this range may be considered as a preferred diameter. For example, less than 2 mm, 1.8 mm, 1.5 mm, 1.2 mm, 1.0 mm, 0.7 mm, 0.5 mm, 0.4 mm, 0.3 mm or 0.2 mm without limitation.

In an embodiment the ring-shaped end portion of the at least one radially extending rotor groove exhibits a line width of less than 2,5 mm, preferably less than 1 mm, more preferably less than 0.4 mm. Any value (or sub-range) within this range may be considered as a preferred diameter. For example, less than 2 mm, 1,5 mm, 1 mm, 0,8 mm, 0,6 mm, 0,5 mm, 0.4 mm, 0.3 mm, 0.2 mm or 0.1 mm, without limitation.

The diameter of the circular shaped-end portion may be a factor of in between 1 and 2, preferably in between 1.05 and 1.5, more preferably in between 1.1 and 1.4 larger than the line width of the radially extending portion of the groove.

The circular shaped end portion of the at least one radially extending rotor groove may exhibit a diameter of less than 12,5 mm, preferably less than 4 mm, preferably less than 2 mm and preferably more than 1 mm. Any value (or sub-range) within this range may be considered as a preferred diameter. For example, less than 12 mm, 10 mm, 8 mm, 6, mm, 5 mm, 4 mm, 3.5 mm, 3 mm, 2.5 mm, 2 mm, 1.5 mm or 1 mm.

In an embodiment the ring-shaped or circular shaped end portion of the at least one rotor groove exhibits dwell volumes of less than 100 µl, preferably less than 50 µl, 20 µl, 10 µl, 5 µl, 2 µl or than 1 µl. Any value (or sub-range) within this range may be considered as a preferred diameter. For example, less than 100 µl, 90 µl, 80 µl, 70 µl, 60 µl, 50 µl, 40 µl, 30 µl, 20 µl, 10 µl, 8 µl, 6 µl, 5 µl, 2 µl, 1.5 µl, 1 µl, 0.8 µl, 0.5 µl or 0.3 µl, without limitation.

In an embodiment the radially extending portion of the at least one rotor groove exhibits dwell volumes of less than 30 µl, preferably less than 20 µl, 0 µl, 5 µl, 2 µl or than 0,6 µl. Any value (or sub-range) within this range may be considered as a preferred diameter. For example, less than 30 µl, 25 µl, 15 µl, 3 µl, 1µl, 0.6 µl, 0.5 µl, 0.4 µl, 0.3 µl, 0.2 µl or 0.1 µl, without limitation.

The (total) dwell volume of a portion of a rotor groove is preferably defined as the total volume of said portion of the groove thus corresponds to the total volume of a liquid dwelling in the portion of the groove at any given time.

The aforementioned parameters minimize dwell volumes and avoid the occurrence of dead ends in the flow path at the same time. This is particularly beneficial for liquid chromatography, since unfavorable dwell volumes may compromised the resolution and intensity of a detector signal due to a dilution or remixing of formerly separated analytes.

In an embodiment the plurality of outer ports is spaced equidistantly on the circular circumference and wherein the angular width of the ring-shaped end portion of the rotor groove is equal or larger than the angular distance between two neighboring outer ports.

The term angular width of a groove or portion thereof preferably denotes the angular or azimuth distance between the outer most edges of the groove or portion thereof. The angular width may have the unit radian. A circumferential width of a groove (or portion of a groove) preferably denotes the angular width times the radial distance of the groove (or portion of the groove) from the rotor face center and may thus also be defined as an arc length along a circular circumference with said radial distance.

Similarly, the angular distance between (neighboring) outer ports is preferably defined as the angle that the closest edges of the neighboring outer ports form viewed from the center of the stator (central port). The angular distance between (neighboring) outer ports may preferably have the unit of radian. The circumferential distance preferably denotes the angular distance times the radius of the circular circumference on which the outer ports are aligned and may thus also be defined as an arc length along said circular circumference.

Depending on the context the circumferential width or angular width as well as the terms circumferential distance or angular distance may be used interchangeable. This is especially the case in the context of comparing preferred angular / circumferential widths of portions of a groove to angular / circumferential distances of outer ports, since the meaning of a relative comparison does not depend on whether distances measured in radian or absolute units are compared.

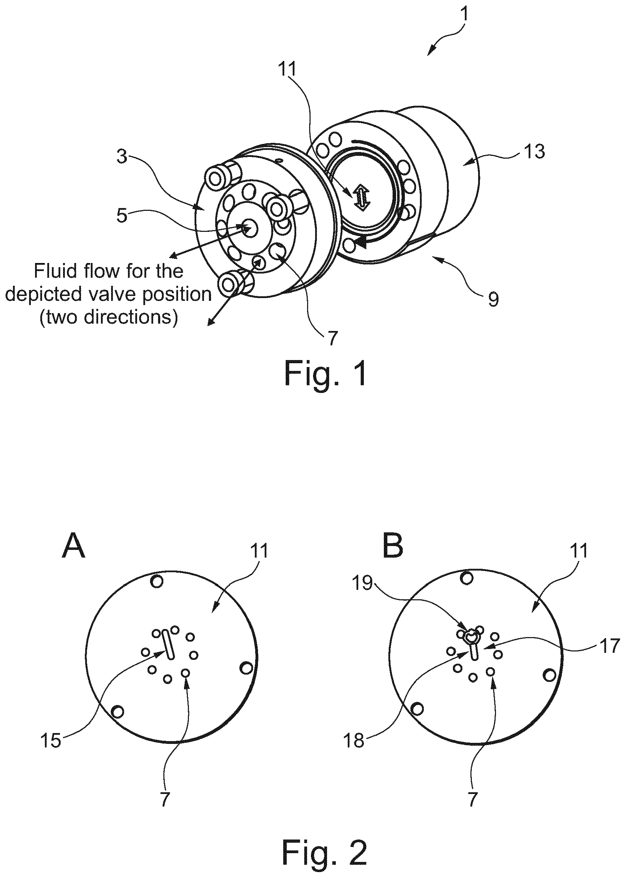

The embodiment of a plurality of outer ports spaced equidistantly on the circular circumference with the angular width of the ring-shaped or circular shaped end portion of the rotor groove being equal or larger than the angular distance between two neighboring outer ports is particularly beneficial for a multi-position valve allowing for a selective switching of the central port with any one of the outer ports. Under the condition at any point during the rotation of the rotor a fluid connection between the central port and at least one of the outer ports is ensured. Thereby, a continuous flow path is maintained even in intermediate positions during a rotation as described. An exemplary embodiment can be seen in Fig. 1-2.

In an embodiment the rotor comprises in addition to the at least one radially extending groove at least one, preferably two, additional rotor grooves dimensioned to allow for establishment of a fluid connection between two or more neighboring outer ports.

The additional rotor grooves and optional stator grooves, are preferably arc-shaped or kidney-shaped. An arc-shaped or kidney-shaped groove preferably denotes a groove with a circular arc shape having a main extension along an azimuthal direction, wherein the circumferential width is larger than the extension along the radial direction. The terms kidney-shaped groove arc-shaped groove or a circumferential groove may be used interchangeably. While the radially extending rotor groove allows for a selective switching from a fluid connection of the central (stator) port with one of the outer (ports) ports to another of the outer ports, the kidney-shaped (arc-shaped, circumferential) rotor groove allows for a selective switching of a fluid connection between a first set of two or more outer ports to a fluid connection with a second set of two or more outer ports. For instance, the kidney-shaped rotor groove may allow for a selective switching of a fluid connection between a first and a second outer port to a fluid connection between the second and a third outer port or a third and a fourth outer port.

The at least one, preferably two additional kidney-shaped rotor grooves may exhibit an angular width that is a least as large as the angular distance between the outer edges of two neighboring outer ports.

At least one, preferably two additional kidney-shaped rotor grooves may exhibit an angular width of at least approximately 60° preferably at least approximately 70°. Such a dimensioning is particularly preferred for a total of six equidistantly spaced outer ports.

The at least one, preferably two additional kidney-shaped rotor grooves may exhibit an angular width of at least approximately 72° preferably at least approximately 75° or 80°. Such a dimensioning is particularly preferred for a total of five equidistantly spaced outer ports.

The optional the kidney-shaped (arc-shaped, circumferential) stator groove allows for increasing the angular width of rotation along which a fluidic connection between a first fluidic channel of the stator, build by an outer stator port, and extended by said stator groove, and a second fluidic channel of the rotor, build by a rotor groove, is established, by reducing the effectively sealing or fluidically tightening angular width between adjacent positions of the circularly arranged, outer stator ports.

For instance, the fluid connection between a kidney-shaped rotor groove and a first and a second outer port may be prolonged during a selective switching of a fluid connection between said first and said second outer port to a fluid connection between said second and a third outer port or a third and a fourth outer port, via an optional stator groove starting at said first outer port and extending, along the same circumferential as the arrangement of outer ports, towards said second outer port,

The least one additional kidney-shaped stator groove may exhibit an angular width that is a least 25% or more and at most 75% or less of the angular distance between the outer edges of two neighboring outer ports.

The at least one additional kidney-shaped stator groove may exhibit an angular width of at least approximately 15° or more and at most 45° or less. Such a dimensioning is particularly preferred for a total of six equidistantly spaced outer ports.

The at least one additional kidney-shaped stator groove may exhibit an angular width of at least approximately 18° or more and at most 54° or less. Such a dimensioning is particularly preferred for a total of five equidistantly spaced outer ports.

Kidney-shaped or arc-shaped rotor grooves are known in the prior art, for instance for providing a two position injection valves, which allows for the switching between a load and a inject position.

For instance, a two position six-port injection valve is known. Herein, the stator comprises six outer ports connected to different components of a liquid chromatography system and arranged equidistantly on a circumference. Numbering the outer ports along said circumference, outer ports 1 and 4 may be connected to a sample loop, outer port 2 to a sample, outer port 3 to a waste, outer port 5 to a pump and outer port 6 to a column.

The rotor face exhibits three kidney-shaped grooves with an angular width of approximately 60° being dimensioned to allow for a fluid connection of neighboring outer ports.

In a load position, one of the three kidney-shaped rotor grooves establish a fluid connection the pump (port 5) and the column (port 6). The pump thus delivers the mobile phase continuously and under pressure across the column. Said path is the pressure-bearing path. The sample loop is filled via the sample- and the excess is directed to the waste port. To this end two remaining kidney grooves establish a fluid connection between the sample (outer port 2) and a first outer port 1 of the sample loop as well as a second outer port 4 of the sample loop and the waste (outer port 3). The latter path is typically not under pressure or at low pressure (pressure-free).

In order to switch the sample loop to a high-pressure operation / eluent flow, the 3-fold kidney pattern is rotated by 60°. In the inject position, in which two of the kidney-shaped rotor grooves establish a fluid connection between the pump (outer port 5) and a second port of the sample loop (outer port 4) as well as a first port of the sample loop (outer port 1) and the column. In said pressure-bearing path the components of the sample loop are transported (under pressure) through the column. The remaining of the three kidney-shaped rotor grooves establishes a connection between the sample (outer port 2) and the waste (outer port 3), which is preferably pressure-free.

As a disadvantage, in the system of the prior art the continuous eluent flow from the pump to the column is interrupted for almost the entire part of the rotation (60°), when switching from the inject to the load position or vice versa. As a result, a pressure increase upstream (towards the pump) and a pressure drop downstream (towards the column) of the valve and connected components occurs.

The inventors have realized that the inventive radial extending rotor groove comprising a radially extending (preferably linear) portion and a ring-shaped end-portion in conjunction to at least one optional arc-shaped or kidney-shaped stator groove in fluidic connection to an outer port, may be advantageously used to avoid or reduce pressure peaks in such two position (multi-port) injection valves.

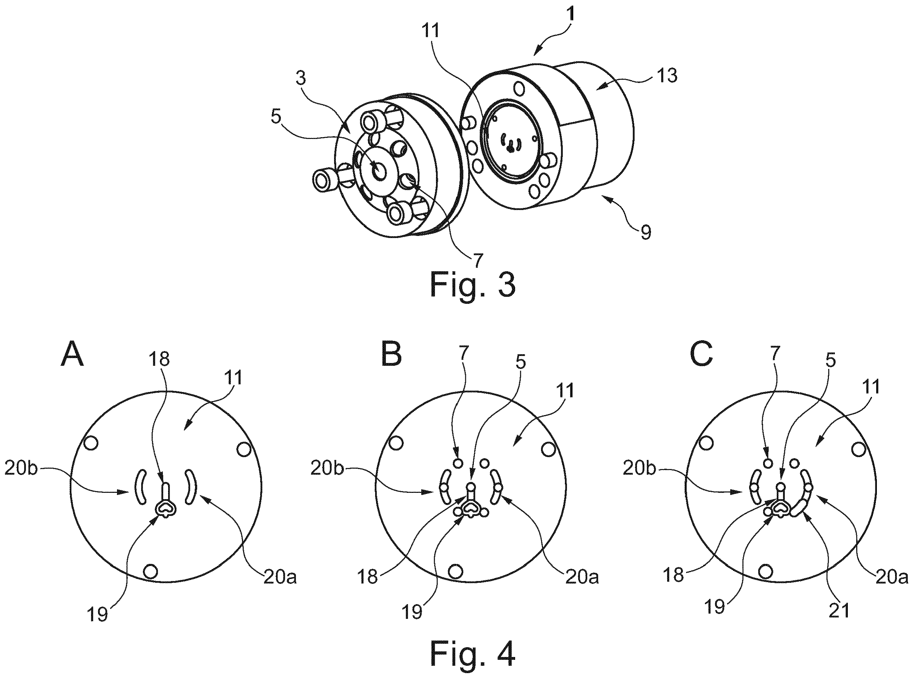

To this end the rotor may comprise in addition to the radial extending groove at least one, preferably two arc-shaped or kidney-shaped, grooves. The stator comprises a central port as well as five or six outer ports connected to different components of the liquid chromatography system and an optional arc-shaped or kidney-shaped groove, facing the rotor seal, and partially reducing the depletion free stator surface between two adjacent outer ports, and being in fluidic connection to one of the outer ports. An exemplary implementation is illustrated in Fig. 3-5.

In a load position two kidney-shaped grooves establish a fluid connection between a sample (outer) port and a first port of the sample loop as well as a second outer port of the sample loop and the waste port. Thereby, the sample loop is filled via a sample port, both of the kidney-shaped rotor grooves and the waste port. The path is preferably pressure free. The radially extending groove connects the central port (pump) to the column (outer) port. The pump delivers the mobile phase from the central (pump) port via a rotor groove comprising a radially extending linear portion and a ring-shape end portion into the column port (pressure-bearing path). Optionally, the columns port is in fluidic connection to a kidney-shaped stator groove extending from said column (outer) port towards said first port of the sample loop which is equivalently described as an extension from the column (outer) port towards the rotor groove, connecting this first port of the sample loop and said sample (outer) port. Said kidney-shaped stator groove is at least partially covered by the ring-shaped portion of the radially extending rotor groove, in this load position, minimizing possible death-end volumes of the optional stator groove.

In the inject position a fluid communication is established between the pump and the column through the sample loop enabling the transport of loop contents toward the column. In order to switch the sample loop into the high pressure condition / eluent flow, the rotor and groove pattern is rotated by 60°. Hereby the pump (central) port is connected via the radially extending rotor groove to a first sample loop port, whereas one of the kidney-shaped rotor grooves establishes a fluid connection between the second (outer) port of the sample loop and the column (outer) port. The pump thus delivers (under pressure) the loop components in the sample loop into the column. Beforehand mentioned, optional, kidney-shaped stator groove is fully covered by the kidney-shaped rotor groove connecting said second (outer) port of the sample loop and column (outer) port, in this inject position, avoiding possible death-end volumes of the optional stator groove. The pressure-free path from the sample loop to the waste may be disconnected or may be established by the other kidney-shaped rotor groove, depending on its angular width and/ or a possible external fluidic connection between sample (outer) port and auxiliary (outer) port., e.g. by means of external tubing and multiport fluidic connectors

Advantageously, while rotating the rotor for a selective switching from a load to an inject position, the fluid connection of the central port (pump) to at least one of the outer ports (column or sample loop) is maintained constantly via the radially extending rotor groove which exhibits a circular- or ring-shaped end portion. More advantageously, while rotating the rotor for a selective switching from a load to an inject position, the fluid connection of the central port (pump) to the column (outer) port is maintained constantly to at least one of the following fluidic pathways, either following said circle- or ring-shape-terminated radially extending rotor groove or consisting of said same radially extending rotor groove, the sample loop, one of the kidney-shaped rotor grooves connecting one sample loop (outer) port and columns (outer) port via the optional, kidney-shaped stator groove extending from the column (outer) port towards the approaching kidney-shaped rotor groove. Transient spikes or drops in pressure or flow rates are effectively reduced or avoided by maintaining a high-pressure bearing, fluidic connection between pump and column while keeping low-pressure and high-pressure pathways separated at all positions along the switching pathway between load and inject positions of the valve.

The same principle can be transferred to a stator consisting of one central port and a plurality of 5 circumferentially arranged outer ports (eliminating the auxiliary port and accepting the fluidic blockage between sample and waste port in the inject position) by adapting (increasing) angular widths of circular- or ring shaped end portion of the radially (preferably linear) extending rotor groove, as well as the kidney-shaped rotor and optional stator groove by preferably a factor of 6/5 to allow for a fluidic connection between pump (central) port and column (outer) port during afore mentioned switching between load and inject positions.

In a further aspect the invention therefore relates a liquid chromatography system comprising a described rotary shear valve.

In yet a further aspect the invention relates to a use of a described rotary shear valve assembly or a liquid chromatography system comprising a rotary shear valve as described herein for liquid chromatography, more preferably for high performance liquid chromatography (HPLC) or fast protein liquid chromatography (FPLC).

A person skilled in the art recognizes that preferred features of the rotary shear valve assembly as described herein may equally apply to the liquid chromatography system or uses thereof and convey the same beneficial effects.

A "liquid chromatography system" preferably means a system as known in the art and described herein suitable for performing a liquid chromatography. A liquid chromatography system is intended in its broad sense to include all apparatus used in connection with liquid chromatography, whether made of only a few simple components or made of numerous, sophisticated components which are computer controlled or the like.

Many different types of liquid chromatography systems and components for LC systems are commercially available from a number of vendors including the Knauer GmbH.

A typical liquid chromatography system includes a solvent reservoir, a pump, a sample injector, columns and one or more detectors as well as optionally additional data collection or processing devices as well as one or more valves for solvent selection, sample injection, column selection or fractioning.

The solvent reservoir holds the components of the mobile phase, typically comprising a mixture of polar and non-polar liquids depending on the sample to be analysed. A column holds packing material (stationary phase) which active component is referred to as absorbents. A sample injector injects the sample into the mobile phase, which by means of the pump forces the liquid to pass through the column. Each component (e.g., analyte such as a protein, DNA etc.) in the liquid interacts slightly differently with the adsorbent material of the column, thus retarding the flow of the analytes. If the interaction is weak, the analytes flow off the column in a short amount of time, and if the interaction is strong, then the analytes take a longer time to flow off the column. The time at which a particular analyte elutes (rises up out of the column) is called retention time. The retention time measured under specific conditions is a distinguishing feature for a given analyte.

Various sorts of columns are available, loaded with adsorbents varying in molecule size, and in the nature of their surface science. The utilization of small molecule size packing materials requires the utilization of higher operational pressure ("backpressure") and regularly enhances chromatographic resolution (i.e. the degree of division between sequential analytes rising up out of the column). Sorbent particles might be hydrophobic or polar in nature. Basic mobile phases incorporate miscible mixture of water with different natural solvent, for instance acetonitrile and methanol.

Today, most liquid chromatography systems include pumps which can generate relatively high pressures of up to around 131 × 10⁶ Pa (19 000 psi). In many situations, an operator can obtain successful results by operating an LC system at "low" pressures of anywhere from just a few psi or so up to 6.9 × 10⁵ Pa (1000 psi) or so. More often than not, however, an operator will find it desirable to operate an LC system at relatively "higher" pressures of over 6.9 × 10⁵ Pa (1000 psi). The operation and use of liquid chromatography systems at such "higher" pressure levels is often referred to as "high pressure liquid chromatography" or "high performance liquid chromatography" (HPLC).

The detector of liquid chromatography system allows for an analysis of the eluent in regard to the presence and/or concentration of analytes. A typical liquid chromatography system may include various detectors including detectors for an absorption measurement, for a conductivity measurement, electrochemical detectors, mass-sensitive detectors, corona-discharge detectors, stray-light detectors, radioactivity detectors, electrochemical detectors, chiral detectors, fluorescence detectors, refractive index detector etc.

The advantages of the proposed rotary shear valve assembly according to the invention to avoid transient, positive or negative peaks of flow rate or pressure may be beneficial in many variants of an LC system, including, but not limited to the above-mentioned variants.

In particular, in regards to HPLC or FLPC, which are characterized by a high pressure in the system, leakages, over-pressure related damaging of system-components and disruptive effects such as damaging and accelerated aging of column bed materials induced by such sharp pressure transients are avoided. For example, multi-position valves are routinely utilized in preparative chromatographic system for fractioning purposes (especially for high flow rate purification applications) and are positioned at the downstream end of the eluent flow path, after the detector, therefore. Depending on the type of detector, it may include flow cells carrying pressure sensitive components, as for example quartz glass windows or lenses for absorption measurements or quartz-glass cuvettes for refractive index- or fluorescence measurements. Especially at increased flow rates, intermediate flow path blockages during trans-position switching of the multi-position/ fractioning valve may induce the risk of damages to flow cells and detector by cracked optical elements and resulting leakages, due to positive pressure spikes. Often, flow rates (and therefore product yield per time) of such preparative chromatographic systems must be limited below the nominal flow rate ratings, in order to limit pressure transients to a tolerable level

For example, injection valves are routinely utilized in analytical chromatographic system for the purpose of identification and quantification of chemical substances and are therefore positioned upstream of the eluent flow path, after the pump and before the column. For challenging analytical tasks, e.g. pesticide screening, analytical systems may preferably be operated at elevated pressure levels up to 15,000 bar (UHPLC, ultra high performance liquid chromatography applications) allowing for a faster separation, higher chromatographic resolution and more sensitive detection as compared to standard HPLC pressure levels. Such UHPLC systems are optimized for low dwell volumes and therefore less tolerant to flow path blockages that may occur during switching between load and inject position of a state-of-the-art injection valve.

Furthermore, sample injection and injection valve switching often is automized for a plurality of samples by the means of automatic sampling devices. Upstream positioned pumps might stop during a valve-switching induced pressure transient due to an exceed of the set pressure limit, therefore interrupting the automatized analysis routine, increasing analysis time and requiring interaction of the operator staff.

Moreover, separation efficiency may be enhanced in particular highly pressure-sensitive polymer-based column materials (including Agarose Sephadex^{™}, Sephacryl^{™}), which are used for example in size exclusion chromatography and different kinds of biochromatographic applications.

Furthermore, as a multi-column circulation system, in which several valves have to be switched synchronously, SMB profits in particular from a rotary shear valve assembly according to the invention. The term simulated moving bed or SMB preferably refers to an ion exclusion chromatographic separation process that utilizes a set of columns interconnected in series in which liquid circulates in the unit by simultaneous shifting of the columns in the opposite direction. SMB is a beneficial separation method for applications of preparative chromatography, since the chromatographic process used for purification and separation of a desired product from impurities or side products can be maintained continuously, while most of the utilized solvent is kept inside a closed fluidic circuit. Therefore, the purification yield of a desired product is maximized while the use of solvent is minimized, thereby leading to reduced cost of operation when compared to traditional batch chromatography methods.

In practice it is difficult to ensure a simultaneous shifting of the columns, such that with rotary shear valves according to the state of the art transient pressure peaks may occur, which may stress the columns or lead to sample loss at additionally required pressure relief valves. Advantageously the rotary shear valve according to the invention avoids these deleterious effects and allows for high flow rates improved purification performance of an SMB system.

### DETAILED DESCRIPTION OF THE INVENTION AND EXAMPLES

It is intended that the claims of the invention define the scope of the invention and that the method and apparatus within the scope of these claims be covered thereby.

### Brief description of the figures

- Fig. 1: Schematic illustration of a rotary shear, multi-position valve assembly comprising a valve housing in which a rotor is rotatably mounted and to which a stator is fixedly attached.
- Fig. 2: Schematic illustration of two rotor faces with A: a rotor groove of the prior art shaped as a straight line and B: a preferred rotor groove according to the invention comprising a ring-shaped end portion. The orange dots depict the position of outer ports of the stator in an assembled state.
- Fig. 3: Schematic illustration of a rotary shear valve assembly for a two-position injection valve comprising a valve housing in which a rotor is rotatably mounted and to which a stator is fixedly attached
- Fig. 4: Schematic illustration of rotor faces for a two-position injection valve including a rotor groove comprising a radially extending linear portion and a ring-shaped end portion as well as two additional kidney-shaped rotor grooves. **A** illustrates solely the rotor face including the aforementioned grooves, **B and C** indicate in addition the position of the stator ports as orange dots in an assembled state. **C** furthermore indicates an optionally elongated stator groove (as well in orange) in an assembled state.
- Fig. 5: Schematic illustration for providing a two-position (7-port) injection valve, including a sample loop,using a rotor groove with a ring-shape end portion as well as two additional kidney-shaped rotor grooves and optionally an arc stator groove on one of the outer ports.

### Detailed description of the figures

Figure 1 schematically illustrates a rotary shear, multi-position valve assembly **1** comprising a valve housing **13** in which a rotor **9** is rotatably mounted and to which a stator **3** is fixedly attached.

The rotary shear valve assembly comprises a stator **3** having a substantially planar stator face and comprising a central port **5** and a plurality of outer ports **7** for fluidly connecting the valve assembly **1** to components of the liquid chromatography system, the plurality of outer ports **7** are arranged on a circular circumference the center of which is defined by the central port **5** as well as a rotor **9** having a substantially planar rotor face **11** abutting said stator **3** at said stator face and exhibiting at least one rotor groove **17** defined in said rotor face **11,** the at least one rotor groove radially extending from a central axis of the rotor **9.**

The rotor **9** is rotatable, relative to the stator **3,** about a central axis, which coincides with the position of the central port **5,** such that rotating the rotor **9** allows for selectively switching a fluid connection of the central port **5** with one of the outer ports **7** to a fluid connection of the central port **5** with any other one of the outer ports **7.**

A fluid-tight seal at the rotor-stator interface may be achieved by abutting said rotor face against the stator face and preferably compressing the components together by appropriate fixation means. As depicted, to this end the rotary shear valve assembly **1** may comprises a valve housing **13** in which the rotor **9** is rotatably mounted and to which the stator **3** is fixedly attached, e.g. by means of screws. A spring packet (not visible) may be located within the valve housing **13** which presses the rotor face **11** against the stator face of the stator **3** to ensure a fluid-tight connection at the rotor-stator interface. By selectively rotating the radially extending rotor groove **17** from a position aligned with a first of the outer ports **7** to a position aligned with a second of the outer ports **7,** different fluid connections of the central port **5** with any one of the outer ports **7** may established.

The rotary shear assembly **1** according to the invention is distinct from the prior art in particular in relation to the rotor face **11** and at least one groove **17** defined therein.

Figure 2 illustrated schematically a rotor groove **15** of the prior art (A) shaped as a straight line in comparison to a preferred rotor groove **17** according to the invention comprising a radially extending linear portion **18** and a ring-shaped end portion **19.**

Advantageously, the ring-shaped end portion **19** ensures that in every position a connection between the central port **5** and at least one of the outer ports **7,** preferably at most two of the outer ports **7,** is maintained. Therefore, while switching a connection between the central port **5** and a first outer port **7** to a connection of the central port **5** with a second outer port **7** the occurrence of transient peaks of pressure or flow rate are effectively avoided. In particular, even in intermediate positions, where the rotor groove **17** is not centrally directed towards a specific outer port **7,** a fluid connection is maintained to one of or both of the nearest neighboring outer ports **7** via the ring-shaped end portion of the rotor groove **18.**

Figure 3 schematically illustrates a rotary shear valve assembly for a two-position injection valve comprising a valve housing **13** in which a rotor **9** is rotatably mounted and to which a stator **3** is fixedly attached.

As depicted in Fig. 1 the rotary shear valve assembly comprises a stator **3** having a substantially planar stator face and comprising a central port **5** and a plurality of outer ports **7** for fluidly connecting the valve assembly **1** to components of the liquid chromatography system, the plurality of outer ports **7** are arranged on a circular circumference the center of which is defined by the central port **5** as well as a rotor **9** having a substantially planar rotor face **11** abutting said stator **3** at said stator face and exhibiting at least one rotor groove **17** defined in said rotor face **11,** the at least one rotor groove radially extending from a central axis of the rotor **9.** The rotor **9** is rotatable, relative to the stator **3,** about a central axis, which coincides with the position of the central port **5,** such that rotating the rotor **9** allows for selectively switching a fluid connection of the central port **5** with one of the outer ports **7** to a fluid connection of the central port **5** with another one of the outer ports **7.**

As depicted in Figure 4 the embodiment is characterized in that the rotor face **11** comprises in addition to the rotor groove **17** according to the invention comprising a radially extending linear portion **18** and a ring-shaped end portion **19** two additional arc-shaped or kidney-shaped rotor grooves **20a** and **20b** and an optional, elongated arc-shaped stator groove **21** (see Fig. 4 C).

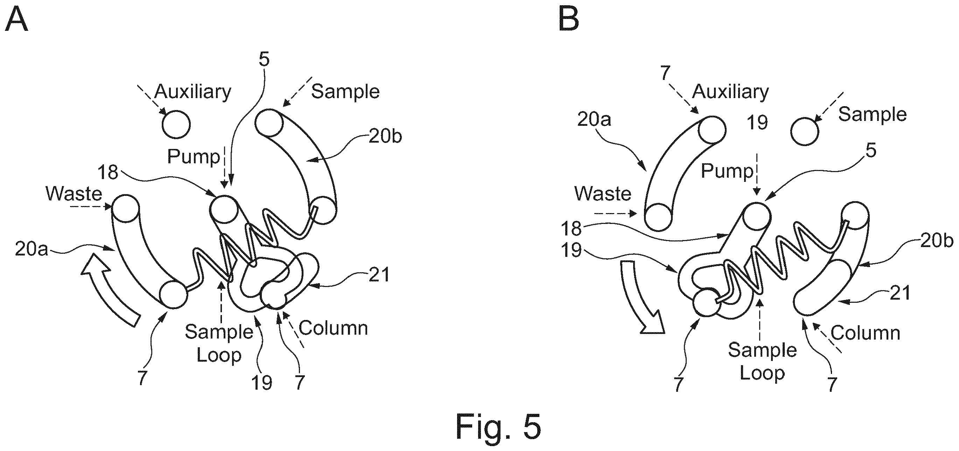

This allows for providing a two-position injection valve allowing for a selective switching between a load position and an inject position in which advantageously due to the inventive rotor groove **17** comprising a radially extending linear portion **18** a ring-shaped end portion **19** transient peaks of pressure or flow rates may be avoided as becomes apparent in Figure 5.

Fig. 5 A illustrated the load position, in which prior to injection, the pump delivers the mobile phase continuously and under (high) pressure across the column. As seen in Fig. 5A in the load position, the sample loop is filled via a sample port of the stator, two additional kidney-shaped rotor groove **20a** and **20b** and the waste port (pressure-free path). At the same time the pump delivers the mobile phase from the central (pump) port **5** via the rotor groove **17** (not to scale) comprising a radially extending linear portion **18** and a ring-shape end portion **19** into the column port as an outer port **7** (pressure-bearing path). If the embodiment comprises an elongated arc-shaped stator groove **21** (see Fig. 4 C) the stator groove **21** is at least partially covered by the ring-shaped groove to avoid occurrence of a dead volume.

Fig. 5 B illustrates the inject position, in which a fluid communication between the pump and column is established through the sample loop enabling the transport of loop contents toward the column. In order to switch the sample loop into the high pressure condition / eluent flow, the rotor has been rotated by 60°. As depicted in Fig. 5B in said inject position the pump (central) port **5** is connected to a sample loop port as another outer port **7** such that the pump delivers across the sample loop and the kidney-shaped rotor groove **20b** and the optional, elongated arc-shaped stator groove **21** into the column (port). The pressure-free path from the sample loop to the waste is disconnected. In case the kidney-shaped groove **20a** would be elongated by 60° a connection may also be possible.

In the intermediate position not shown (30° rotation), the pump is connected to a sample loop port and the column port. The connection between the pressure free waste and sample ports to the sample loop is broken. Further rotation towards the inject position may cause the connection between the pump/ring-shaped end portion of groove and column port to break
In the case of the additional stator groove **21** in the shape of a kidney (see Fig 4C), a fluid connection of the pump to the column via the ring-shaped end portion **19** of the groove, the sample loop, the kidney-shaped groove **20b,** the stator kidney-shaped groove and the column port is constantly maintained.

In the case without an additional stator groove in the shape of a kidney, a very short-term interruption between the pump and the column may occur. However, reducing the distance over which interruption occurs by over 30° and thus ensuring that a fluid connection is maintained for a majority of the path of the rotation, already leads to a substantial reduction of pressure spikes.

### REFERENCE SIGNS

- 1: valve assembly
- 3: stator
- 5: central port
- 7: outer port
- 9: rotor
- 11: rotor face
- 13: valve housing
- 15: rotor groove of the prior art
- 17: inventive rotor groove
- 18: radially extending portion
- 19: ring-shaped end portion
- 20a, 20b: additional rotor groove, preferably kidney-shaped rotor grooves
- 21: optional stator groove, preferably kidney-shaped stator groove

## Claims

1. A rotary shear valve assembly (1)
a) a stator (3) having a stator face and comprising a central port (5) and a plurality of outer ports (7) for fluidly connecting the valve assembly (1) to components of the liquid chromatography system, the plurality of outer ports (7) being arranged on a circular circumference the center of which is defined by the central port (5) and
b) a rotor (9) having a rotor face (11) abutting said stator (3) at said stator face and exhibiting at least one rotor groove (17) defined in said rotor face, the at least one rotor groove (17) radially extending from a central axis of the rotor (9)
wherein the rotor (9) is rotatable, relative to the stator (3), about said central axis, which coincides with the position of the central port (5), such that rotating the rotor (9) allows for a selective switching of a fluid connection of the central port (5) with one of the outer ports (7) to a fluid connection of the central port (5) with another one of the outer ports (7)
**characterized in that**
the at least one rotor groove (17) defined in said rotor face (11) comprises a radially extending portion (18) and a ring-shaped or circular shaped end portion (19) being dimensioned such that during the rotation of the rotor (9) for the selective switching a fluid connection of the central port (5) with at least one of the outer ports (7) is maintained, so as to avoid transient peaks of pressure or flow rate in intermediate positions of the switching.

2. The rotary shear valve assembly (1) according to the previous claim
**characterized in that**
the central port (5) defines a central passage through the stator (3) and the plurality of outer ports (7) each define outer passages through said stator (3).

3. The rotary shear valve assembly (1) according to any one of the previous claims
**characterized in that**
the rotary shear valve assembly (1) comprise four, six, eight or more outer ports (7) arranged on said circumference.

4. The rotary shear valve assembly (1) according to any one of the previous claims
**characterized in that**
the plurality of outer ports (7) are arranged on two or more circumference with differing diameters.

5. The rotary shear valve assembly (1) according to any one of the previous claims
**characterized in that**
the plurality of outer ports (7) are spaced equidistantly on the said circular circumference and wherein the angular width of the ring-shaped or circular shaped end portion (19) of said rotor groove (17) is equal or larger than the angular distance between two neighboring outer ports (7).

6. The rotary shear valve assembly (1) according to any one of the previous claims
**characterized in that**
the radially extending portion (18) of the at least one rotor groove (17) is a straight line.

7. The rotary shear valve assembly (1) according to any one of the previous claims
**characterized in that**
the cross-sectional area of the ring-shaped end portion (19) of the at least one rotor groove (17) is approximately half the cross-sectional area of the radially extending portion (18) of the at least one rotor groove (17) to ensure a constant flow cross-section throughout the at least one rotor groove (17) when aligned with a selected outer port (7).

8. The rotary shear valve assembly (1) according to any one of the previous claims
**characterized in that**
the ring-shaped end portion (19) of the at least one rotor groove (17) exhibits a line width of less than 0,4 mm and/or
the radially extending portion (18) of the at least one rotor groove (17) exhibits a line width of less than 0,75 mm.

9. The rotary shear valve assembly (1) according to any one of the previous claims
**characterized in that**
the ring-shaped end portion (19) of the at least one rotor groove (17) exhibits dwell volumes of less than 1 µl and/or the radially extending portion (18) of the at least one rotor groove (17) exhibits dwell volumes of less than 0,6 µl.

10. The rotary shear valve assembly (1) according to any one of the previous claims
**characterized in that**
the rotor (9) comprises in addition to the at least one groove (17) one or more, preferably two, additional rotor grooves (20a, 20b) dimensioned to allow for establishing a fluid connection between two or more neighboring outer ports.

11. The rotary shear valve assembly (1) according to the previous claims
**characterized in that**
the stator (3) comprises in addition to a central port (5) and a plurality of outer ports (7) at least one stator groove (21) dimensioned to allow for establishing a fluid connection between one of the rotor grooves (20a, 20b) and at least one of the outer ports (7) along a rotation path of the rotor (9) with respect to the stator (3) that is substantially longer than the radial extension that corresponds to the inner diameter of said outer port (7).

12. The rotary shear valve assembly (1) according to any one of the previous claims
**characterized in that**
the rotary shear valve assembly (1) comprises a valve housing (13), wherein the rotor (9) is rotatably mounted in said valve housing (13) and the stator (3) is fixedly attached to said valve housing (13).

13. The rotary shear valve assembly (1) according to the previous claims
**characterized in that**
a spring packet is located within the valve housing (13), which presses the rotor face (11) against the stator (3), wherein preferably the elastic restoring force of the spring packet may be chosen according to a maximal fluid pressure for which the valve assembly (1) shall ensure a fluid-tight seal at the rotor-stator interface.

14. Liquid chromatography system comprising a rotary shear valve assembly (1) according to any one of the preceding claims.

15. Use of a rotary shear valve assembly (1) according to any one of claims 1-13 of a liquid chromatography system according to the preceding claim for liquid chromatography, more preferably for high performance liquid chromatography (HPLC), ultra high performance liquid chromatography (UHPLC), simulated moving bed (SMB) processes or fast protein liquid chromatography (FPLC).

## Patentansprüche

1. Drehscherventilanordnung (1)
a) ein Stator (3) mit einer Statorfläche und umfassend eine Mittelöffnung (5) und eine Vielzahl von Außenöffnungen (7) zum Fluidverbinden der Ventilanordnung (1) mit Komponenten des Flüssigchromatographiesystems, wobei die Vielzahl von Außenöffnungen (7) auf einem Kreisumfang angeordnet ist, dessen Mittelpunkt durch die Mittelöffnung (5) definiert ist, und
b) ein Rotor (9) mit einer Rotorfläche (11), die an der Statorfläche an dem Stator (3) anliegt und mindestens eine in der Rotorfläche definierte Rotorrille (17) aufweist, wobei sich die mindestens eine Rotorrille (17) radial von einer Mittelachse des Rotors (9) erstreckt,
wobei der Rotor (9) relativ zu dem Stator (3) um die Mittelachse drehbar ist, die mit der Position der Mittelöffnung (5) zusammenfällt, sodass durch Drehen des Rotors (9) ein wahlweises Umschalten einer Fluidverbindung der Mittelöffnung (5) mit einer der Außenöffnungen (7) auf eine Fluidverbindung der Mittelöffnung (5) mit einer anderen der Außenöffnungen (7) ermöglicht wird,
**dadurch gekennzeichnet, dass**
die mindestens eine in der Rotorfläche (11) definierte Rotorrille (17) einen radial verlaufenden Abschnitt (18) und einen ring- oder kreisförmigen Endabschnitt (19) umfasst, der so bemessen ist, dass während der Drehung des Rotors (9) zum wahlweisen Umschalten eine Fluidverbindung der Mittelöffnung (5) mit mindestens einer der Außenöffnungen (7) aufrechterhalten wird, um vorübergehende Druck- oder Strömungsspitzen in Zwischenstellungen des Schaltens zu verhindern.

2. Drehscherventilanordnung (1) nach dem vorstehenden Anspruch,
**dadurch gekennzeichnet, dass**
die Mittelöffnung (5) einen zentralen Durchgang durch den Stator (3) definiert und die Vielzahl von Außenöffnungen (7) jeweils äußere Durchgänge durch den Stator (3) definiert.

3. Drehscherventilanordnung (1) nach einem der vorstehenden Ansprüche,
**dadurch gekennzeichnet, dass**
die Drehscherventilanordnung (1) vier, sechs, acht oder mehr auf dem Umfang angeordnete Außenöffnungen (7) umfasst.

4. Drehscherventilanordnung (1) nach einem der vorstehenden Ansprüche,
**dadurch gekennzeichnet, dass**
die Vielzahl von Außenöffnungen (7) an zwei oder mehr Umfängen mit unterschiedlichen Durchmessern angeordnet ist.

5. Drehscherventilanordnung (1) nach einem der vorstehenden Ansprüche,
**dadurch gekennzeichnet, dass**
die Vielzahl von Außenöffnungen (7) in gleichen Abständen auf dem Kreisumfang angeordnet ist und wobei die Winkelbreite des ring- oder kreisförmigen Endabschnitts (19) der Rotorrille (17) gleich oder größer als der Winkelabstand zwischen zwei benachbarten Außenöffnungen (7) ist.

6. Drehscherventilanordnung (1) nach einem der vorstehenden Ansprüche,
**dadurch gekennzeichnet, dass**
der radial verlaufende Abschnitt (18) der mindestens einen Rotorrille (17) eine Gerade ist.

7. Drehscherventilanordnung (1) nach einem der vorstehenden Ansprüche,
**dadurch gekennzeichnet, dass**
die Querschnittsfläche des ringförmigen Endabschnitts (19) der mindestens einen Rotorrille (17) ungefähr halb so groß wie die Querschnittsfläche des radial verlaufenden Abschnitts (18) der mindestens einen Rotorrille (17) ist, um einen konstanten Strömungsquerschnitt durch die mindestens eine Rotorrille (17) zu gewährleisten, wenn diese auf eine ausgewählte Außenöffnung (7) ausgerichtet ist.

8. Drehscherventilanordnung (1) nach einem der vorstehenden Ansprüche,
**dadurch gekennzeichnet, dass**
der ringförmige Endabschnitt (19) der mindestens einen Rotorrille (17) eine Linienweite von weniger als 0,4 mm aufweist und/oder
der radial verlaufende Abschnitt (18) der mindestens einen Rotorrille (17) eine Linienweite von weniger als 0,75 mm aufweist.

9. Drehscherventilanordnung (1) nach einem der vorstehenden Ansprüche,
**dadurch gekennzeichnet, dass**
der ringförmige Endabschnitt (19) der mindestens einen Rotorrille (17) Verweilvolumina von weniger als 1 µl und/oder der radial verlaufende Abschnitt (18) der mindestens einen Rotorrille (17) Verweilvolumina von weniger als 0,6 µl aufweist.

10. Drehscherventilanordnung (1) nach einem der vorstehenden Ansprüche,
**dadurch gekennzeichnet, dass**
der Rotor (9) neben der mindestens einen Nut (17) eine oder mehrere, bevorzugt zwei, zusätzliche Rotorrillen (20a, 20b) umfasst, die so bemessen sind, dass sie eine Fluidverbindung zwischen zwei oder mehr benachbarten Außenöffnungen ermöglichen.

11. Drehscherventilanordnung (1) nach den vorstehenden Ansprüchen,
**dadurch gekennzeichnet, dass**
der Stator (3) zusätzlich zu einer Mittelöffnung (5) und einer Vielzahl von Außenöffnungen (7) mindestens eine Statornut (21) umfasst, die so bemessen ist, dass sie eine Fluidverbindung zwischen einer der Rotorrillen (20a, 20b) und mindestens einer der Außenöffnungen (7) entlang eines Drehwegs des Rotors (9) in Bezug auf den Stator (3) ermöglicht, der wesentlich länger als die radiale Ausdehnung ist, die dem Innendurchmesser der Außenöffnung (7) entspricht.

12. Drehscherventilanordnung (1) nach einem der vorstehenden Ansprüche,
**dadurch gekennzeichnet, dass**
die Drehscherventilanordnung (1) ein Ventilgehäuse (13) umfasst, wobei der Rotor (9) drehbar in dem Ventilgehäuse (13) gelagert ist und der Stator (3) fest an dem Ventilgehäuse (13) angebracht ist.

13. Drehscherventilanordnung (1) nach den vorstehenden Ansprüchen,
**dadurch gekennzeichnet, dass**
sich ein Federpaket, das die Rotorfläche (11) gegen den Stator (3) drückt, innerhalb des Ventilgehäuses (13) befindet, wobei die elastische Rückstellkraft des Federpakets bevorzugt in Abhängigkeit von einem maximalen Fluiddruck wählbar ist, für den die Ventilanordnung (1) eine fluiddichte Abdichtung an der Rotor-Stator-Grenzfläche zu gewährleisten hat.

14. Flüssigchromatographiesystem, das eine Drehscherventilanordnung (1) nach einem der vorstehenden Ansprüche umfasst.

15. Verwendung einer Drehscherventilanordnung (1) nach einem der Ansprüche 1 bis 13 oder eines Flüssigchromatographiesystems nach dem vorstehenden Anspruch zur Flüssigchromatographie, besonders bevorzugt für Hochleistungsflüssigchromatographie (HPLC), Ultrahochleistungsflüssigchromatographie (UHPLC), simulierte Fließbett- (SMB)-Prozesse oder schnelle Protein-Flüssigchromatographie (FPLC).

## Revendications

1. Ensemble soupape rotative à cisaillement (1)
a) un stator (3) ayant une face de stator et comprenant un orifice central (5) et une pluralité d'orifices extérieurs (7) pour relier fluidiquement l'ensemble soupape (1) à des composants du système de chromatographie liquide, la pluralité d'orifices extérieurs (7) étant agencés sur une circonférence circulaire dont le centre est défini par l'orifice central (5) et
b) un rotor (9) ayant une face de rotor (11) venant en butée contre ledit stator (3) au niveau de ladite face de stator et présentant au moins une rainure de rotor (17) définie dans ladite face de rotor, l'au moins une rainure de rotor (17) se prolongeant radialement à partir d'un axe central du rotor (9) dans lequel le rotor (9) est rotatif, par rapport au stator (3), autour dudit axe central, qui coïncide avec la position de l'orifice central (5), de sorte que la rotation du rotor (9) permet une commutation sélective d'une liaison fluidique de l'orifice central (5) avec l'un des orifices extérieurs (7) à une liaison fluidique de l'orifice central (5) avec un autre des orifices extérieurs (7)
**caractérisé en ce que**
l'au moins une rainure de rotor (17) définie dans ladite face de rotor (11) comprend une partie se prolongeant radialement (18) et une partie d'extrémité de forme annulaire ou circulaire (19) étant dimensionnée de sorte que pendant la rotation du rotor (9) pour la commutation sélective, une liaison fluidique de l'orifice central (5) avec au moins l'un des orifices extérieurs (7) soit maintenue, de manière à éviter des pics transitoires de pression ou de débit dans des positions intermédiaires de la commutation.

2. Ensemble soupape rotative à cisaillement (1) selon la revendication précédente
**caractérisé en ce que**
l'orifice central (5) définit un passage central à travers le stator (3) et la pluralité d'orifices extérieurs (7) définissent chacun des passages extérieurs à travers ledit stator (3).

3. Ensemble soupape rotative à cisaillement (1) selon l'une quelconque des revendications précédentes
**caractérisé en ce que**
l'ensemble soupape rotative à cisaillement (1) comprend quatre, six, huit orifices extérieurs (7) ou plus agencés sur ladite circonférence.

4. Ensemble soupape rotative à cisaillement (1) selon l'une quelconque des revendications précédentes
**caractérisé en ce que**
la pluralité d'orifices extérieurs (7) sont agencés sur deux circonférences ou plus avec des diamètres différents.

5. Ensemble soupape rotative à cisaillement (1) selon l'une quelconque des revendications précédentes
**caractérisé en ce que**
la pluralité d'orifices extérieurs (7) sont espacés de manière équidistante sur ladite circonférence circulaire et dans lequel la largeur angulaire de la partie d'extrémité de forme annulaire ou circulaire (19) de ladite rainure de rotor (17) est supérieure ou égale à la distance angulaire entre deux orifices extérieurs (7) voisins.

6. Ensemble soupape rotative à cisaillement (1) selon l'une quelconque des revendications précédentes
**caractérisé en ce que**
la partie se prolongeant radialement (18) de l'au moins une rainure de rotor (17) est une ligne droite.

7. Ensemble soupape rotative à cisaillement (1) selon l'une quelconque des revendications précédentes
**caractérisé en ce que**
la zone de section transversale de la partie d'extrémité de forme annulaire (19) de l'au moins une rainure de rotor (17) est approximativement la moitié de la zone de section transversale de la partie se prolongeant radialement (18) de l'au moins une rainure de rotor (17) pour assurer une section transversale d'écoulement constante dans toute l'au moins une rainure de rotor (17) lorsqu'elle est alignée avec un orifice extérieur (7) sélectionné.

8. Ensemble soupape rotative à cisaillement (1) selon l'une quelconque des revendications précédentes
**caractérisé en ce que**
la partie d'extrémité de forme annulaire (19) de l'au moins une rainure de rotor (17) présente une largeur de ligne inférieure à 0,4 mm et/ou
la partie se prolongeant radialement (18) de l'au moins une rainure de rotor (17) présente une largeur de ligne inférieure à 0,75 mm.

9. Ensemble soupape rotative à cisaillement (1) selon l'une quelconque des revendications précédentes
**caractérisé en ce que**
la partie d'extrémité de forme annulaire (19) de l'au moins une rainure de rotor (17) présente des volumes morts inférieurs à 1 µl et/ou la partie se prolongeant radialement (18) de l'au moins une rainure de rotor (17) présente des volumes morts inférieurs à 0,6 µl.

10. Ensemble soupape rotative à cisaillement (1) selon l'une quelconque des revendications précédentes
**caractérisé en ce que**
le rotor (9) comprend en plus de l'au moins une rainure (17) une ou plusieurs, de préférence deux, rainures de rotor supplémentaires (20a, 20b) dimensionnées pour permettre l'établissement d'une liaison fluidique entre deux orifices extérieurs voisins ou plus.

11. Ensemble soupape rotative à cisaillement (1) selon les revendications précédentes
**caractérisé en ce que**
le stator (3) comprend en plus d'un orifice central (5) et d'une pluralité d'orifices extérieurs (7) au moins une rainure de stator (21) dimensionnée pour permettre l'établissement d'une liaison fluidique entre l'une des rainures de rotor (20a, 20b) et au moins l'un des orifices extérieurs (7) le long d'un chemin de rotation du rotor (9) par rapport au stator (3) qui est sensiblement plus long que l'extension radiale qui correspond au diamètre intérieur dudit orifice extérieur (7).

12. Ensemble soupape rotative à cisaillement (1) selon l'une quelconque des revendications précédentes
**caractérisé en ce que**
l'ensemble soupape rotative à cisaillement (1) comprend un boîtier de soupape (13), dans lequel le rotor (9) est monté de manière rotative dans ledit boîtier de soupape (13) et le stator (3) est fixé de manière fixe audit boîtier de soupape (13) .

13. Ensemble soupape rotative à cisaillement (1) selon les revendications précédentes
**caractérisé en ce que**
un bloc-ressort est situé à l'intérieur du boîtier de soupape (13), qui presse la face de rotor (11) contre le stator (3), dans lequel de préférence la force de rappel élastique du bloc-ressort peut être choisie en fonction d'une pression de fluide maximale pour laquelle l'ensemble soupape (1) doit assurer une étanchéité au fluide à l'interface rotor-stator.

14. Système de chromatographie liquide comprenant un ensemble soupape rotative à cisaillement (1) selon l'une quelconque des revendications précédentes.

15. Utilisation d'un ensemble soupape rotative à cisaillement (1) selon l'une quelconque des revendications 1 à 13 ou d'un système de chromatographie liquide selon la revendication précédente pour la chromatographie liquide, de manière davantage préférée pour la chromatographie liquide haute performance (HPLC), la chromatographie liquide ultra haute performance (UHPLC), les procédés à lit mobile simulé (SMB) ou la chromatographie liquide rapide de protéines (FPLC).
